# EUROPÄISCHE PATENTANMELDUNG

(11) **EP 1 892 418 A2**
(43) Veröffentlichungstag der Anmeldung: **27.02.2008**
(21) Anmeldenummer: 07015680.7
(22) Anmeldetag: 09.08.2007
(51) Int. Cl.: F04C 2/18, F04C 15/00

(54) **Zahnradmaschine**

(30) Priorität: 12.08.2006 DE 202006012407 U; 12.08.2006 DE 202006012409 U
(71) Anmelder: Industra Industrianlagen - Maschinen und Teile GmbH, 63150 Heusenstamm (DE)
(72) Erfinder: Planert, Albert, 63150 Heusenstamm (DE); Planert, Sebastian, 63150 Heusenstamm (DE); Planert, Patrick, 63150 Heusenstamm (DE)
(74) Vertreter: KEIL & SCHAAFHAUSEN Patentanwälte

(57) **Zusammenfassung**

Die Erfindung betrifft eine Zahnradmaschine (1), insbesondere eine Zahnradpumpe, mit einem Gehäuse (2) und einem in dem Gehäuse (2) angeordneten Triebwerk aus wenigstens zwei miteinander kämmenden Zahnrädern (50, 53) zur Förderung und/oder Dosierung eines Fluides, insbesondere eines Lackes, eines Wachses, eines Lösemittels, eines Härters, eines Abdichtmittels oder dergl. Ein erstes Zahnrad (50) des Triebwerks ist verdrehsicher mit einer Antriebswelle (13) verbunden, die einen aus dem Gehäuse (2) ragenden Wellenzapfen aufweist. Das Gehäuse (2) weist ein Lager (15), in dem die Antriebswelle (13) an dem wellenzapfenseitigen Ende (19) gelagert ist, und ein Gleitlager auf, in dessen Lagerbuchse (32) das dem Wellenzapfen gegenüber liegende Ende der Antriebswelle (13) angeordnet ist. Die Erfindung zeichnet sich dadurch aus, dass das Gehäuse (2) an der Antriebswelle (13) in Richtung des wellenzapfenseitigen Endes (19) der Antriebswelle (19) mittels einer Führungswellendichtung (60) abgedichtet ist, die innen liegend vor dem als Wälzlager (15) ausgebildeten Lager angeordnet ist und die mindestens eine Dichtlippe (61, 62) aufweist, und dass die Lagerbuchse (32) eine innere Oberfläche aus Kunststoff aufweist.

## Beschreibung

Die Erfindung betrifft eine Zahnradmaschine, insbesondere Zahnradpumpe, mit einem Gehäuse und einem in dem Gehäuse angeordneten Triebwerk aus wenigstens zwei miteinander kämmenden Zahnrädern zur Förderung und/oder Dosierung eines Fluides, insbesondere eines Lackes, eines Wachses, eines Lösemittels, eines Härters, eines Abdichtmittels oder dergl., wobei ein erstes Zahnrad des Triebwerks verdrehsicher mit einer Antriebswelle verbunden ist, die einen aus dem Gehäuse ragenden Wellenzapfen aufweist, wobei das Gehäuse ein Lager, in dem die Antriebswelle an dem wellenzapfenseitigen Ende gelagert ist, und ein Gleitlager aufweist, in dessen Lagerbuchse das dem Wellenzapfen gegenüber liegende Ende der Antriebswelle angeordnet ist.

Derartige Zahnradmaschinen werden beispielsweise als Zahnradpumpen zur Dosierung von Fluiden, beispielsweise von Lacken, Wachsen, Lösemitteln, Abdichtmitteln, Härtern oder dergl., in der Automobilindustrie verwendet. Diese Zahnradmaschinen sind in der Regel an Roboterarmen befestigt, welche die jeweilige Zahnradpumpe an den Ort bewegen, an dem das Fluid aufgebracht werden soll. Hierfür ist es günstig, wenn die Zahnradpumpen ein geringes Gewicht aufweisen und ein kleines Volumen einnehmen, so dass der Roboterarm weniger stabil gebaut sein muss und die Zahnradpumpe auch an Orte gelangen kann, die nur schwer zugänglich sind.

Bekannte Zahnradpumpen weisen zwei miteinander kämmende Zahnräder auf, wobei ein erstes Zahnrad mit einer Antriebswelle verdrehsicher verbunden ist. Die in einem Gehäuse angeordneten Zahnräder fördern und dosieren das Fluid, wobei die Fördermenge proportional zum Umdrehungswinkel der Zahnräder ist. Die Antriebswelle ist an der Seite, an der der Wellenzapfen aus dem Gehäuse ragt, mit dem jeweiligen Antriebsmotor verbunden. Die Antriebswelle ist üblicherweise an dem wellenzapfenseitigen Ende in einem Lager und an dem gegenüber liegenden Ende in einem Gleitlager gelagert, für das in bekannten Zahnradpumpen eine metallische Lagerbuchse verwendet wird.

Bekannte Zahnradpumpen arbeiten mit Drehzahlen zwischen etwa 60 bis 80 Umdrehungen pro Minute und weisen bei einem Fördervolumen von etwa 6 cm³ pro Umdrehung etwa ein Gewicht von 5 bis 7 kg auf. Diese Lager mit metallischen Lagerbuchsen erlauben keine etwa 80 Umdrehungen pro Minute wesentlich übersteigenden Drehzahlen, so dass eine Zahnradpumpe, um ein höheres Fördervolumen zu erreichen, mit größeren Zahnrädern ausgestattet werden muss. Diese größeren Zahnräder bedingen jedoch ein höheres Gewicht und ein größeres Volumen der Zahnradpumpe.

In den Innenraum des Gehäuses wird der zu dosierende Lack mit Druck eingeführt. Das Innere des Gehäuses ist bei bekannten Zahnradpumpen hinter einem Gleitlager üblicherweise gegen die Antriebswelle mittels Rundschnüren und einer Feder abgedichtet. Diese Dichtung verschleißt sehr schnell und muss sehr oft, üblicherweise einmal pro Tag durch Anziehen der Feder nachgestellt werden. Dies ist sehr aufwändig.

Außerdem besteht die Gefahr, dass der im Inneren des Gehäuses befindliche Lack in das Lager eindringt und dieses zerstört.

Aufgabe der vorliegenden Erfindung ist es demgegenüber, eine Zahnradmaschine der eingangs genannten Art bereitzustellen, welche ein Eindringen des Lackes in das Lager vermeidet, wartungsärmer und langlebiger ist sowie bei gleichem Fördervolumen kleiner gebaut ist und ein geringeres Gewicht aufweist.

Diese Aufgabe wird erfindungsgemäß im Wesentlichen dadurch gelöst, dass das Gehäuse an der Antriebswelle in Richtung des wellenzapfenseitigen Endes der Antriebswelle mittels einer Führungswellendichtung abgedichtet ist, die innen liegend vor dem als Wälzlager ausgebildeten Lager angeordnet ist und die mindestens eine Dichtlippe aufweist, und dass die Lagerbuchse eine innere Oberfläche aus Kunststoff aufweist.

Die innen vor dem Wälzlager angeordnete Führungswellendichtung verhindert das Eindringen des im Gehäuseinneren befindlichen Lackes in das außen liegende Wälzlager. Zusätzlich entfällt das Nachziehen der Feder und der Austausch der Dichtungen ist nur in größeren Zeitabständen erforderlich. Die Führungswellendichtung dient dabei auch der Führung der Antriebswelle in dem Gehäuse zusätzlich zu der Lagerung durch das Wälzlager.

Dabei wird es bevorzugt, wenn die Antriebswelle mit dem Wälzlager und der Führungswellendichtung eine Einheit bildet, die gemeinsam montiert und demontiert werden kann. Bei Wartungsarbeiten muss somit lediglich die Antriebswelle mit dem Wälzlager und der Führungswellendichtung aus dem Gehäuse gezogen und ggf. durch eine neue Welleneinheit ersetzt werden. Ggf. muss die Antriebswelle geläppt werden. Die vorteilhafte Anordnung der Führungswellendichtung innen liegend vor dem Wälzlager ermöglicht es, dass die erste Dichtlippe der Führungswellendichtung, die an dem triebwerksseitigen Ende der Führungswellendichtung angeordnet ist, bei einem Spülvorgang mittels eines Spülfluids gespült werden kann.

Zudem wird durch den erfindungsgemäßen Aufbau der Zahnradmaschine, insbesondere die Ausbildung der inneren Oberfläche der Lagerbuchse aus Kunststoff, erreicht, dass die Zahnradmaschine mit höheren Drehzahlen, d.h. mit mehr als 300 Umdrehungen pro Minute betrieben werden kann und somit bei gleichen Förderraten kleiner gebaut werden kann. Folglich kann die Zahnradpumpe an Orten eingesetzt werden, die schwerer zugänglich sind. Die erfindungsgemäße Zahnradmaschine weist auch ein kleineres Gewicht auf und ist somit im Roboterbetrieb besser zu handhaben. Beispielsweise hat eine erfindungsgemäße Zahnradpumpe bei einer Drehzahl von 200 Umdrehungen pro Minute und einem Fördervolumen von 6 cm³ ein Gewicht von etwa 2 kg.

In einem bevorzugten Ausführungsbeispiel besteht die Führungswellendichtung aus einem Polyethylen (PE), insbesondere einem UHMW-PE (ultrahochmolekulares PE), oder einem PTFE oder aus einem Compound aus einem oder mehrerer diesen Materialien, da eine Dichtlippe aus diesen Materialien einfach herzustellen ist. Das UHMW-PE hat den Vorteil, dass dieses Material besonders hoch verdichtet ist.

In einem besonders bevorzugten Ausführungsbeispiel besteht der Kunststoff, der an der inneren Oberfläche der Lagerbuchse angeordnet ist, aus einem lösemittelbeständigen Kunststoff, der keine lackbenetzungsstörenden Substanzen aufweist (LABS-frei), beispielsweise aus PTFE (Polytetrafluorethylen) und/oder aus einem PE (Polyethylen), vorzugsweise aus einem UHMW-PE, und/oder aus einem PA (Polyamid) und/oder einem POM (Polyacetal) und/oder aus einem Compound mit einem oder mehrerer dieser Materialien, vorzugsweise mit Glasfasern, besonders bevorzugt aus einem PTFE-Compound. Diese Kunststoffe sind besonders geeignet für hohe Drehzahlen und im Falle des PTFE besonders hitze- und lösemittelbeständig. In einem besonders bevorzugten Ausführungsbeispiel beträgt die Dicke der die innere Oberfläche der Lagerbuchse bildende Kunststoffschicht mindestens 0,5 mm, bevorzugt mindestens 1,5 mm, besonders bevorzugt mindestens 3 mm. Durch diese Schichtdicken wird gewährleistet, dass die Lagerbuchse ausreichend steif ist.

In einem weiteren Ausführungsbeispiel weist das Gehäuse zur Reinigung seines Inneren, der darin aufgenommenen, wenigstens zwei miteinander kämmenden Zahnräder und der diese tragenden Wellen oder Achsen wenigstens einen Spülkanal auf, der sich von einer Eingangsöffnung zu einer Ausgangsöffnung erstreckt und durch das Innere des Gehäuses verläuft. Die Aufgabe dieses Spülkanals ist es, bei Lackwechseln das Innere des Gehäuses, die Zahnräder und die Wellen oder Achsen, zu reinigen. Weiter bevorzugt verläuft der Spülkanal bereichsweise durch wenigstens eine der Wellen oder Achsen, bereichsweise durch eine schraubenlinienförmig um wenigstens eine der Wellen oder Achsen umlaufende Nut und bereichsweise durch den zwischen den Zahnrädern und dem Gehäuse gebildeten Raum. Durch diese Anordnung des Spülkanals ist sichergestellt, dass das gesamte Gehäuseinnere schnell und effizient gespült werden kann. In einem besonders bevorzugten Ausführungsbeispiel weist der Spülkanal eine zweite Eingangsöffnung in einer in dem Gehäuse befestigten Achse auf, auf der das mindestens eine zweite Zahnrad gelagert ist. Durch die Bereitstellung von zwei Eingangsöffnungen für den Spülkanal kann eine vollständige Spülung des Gehäuses in einer kürzeren Zeit erreicht werden.

Bei einer bevorzugten und vorteilhaften Kombination der Lagerbuchse mit der Oberfläche aus Kunststoff mit einem Kugellager als Wälzlager für die Antriebswelle (2-Punkt-Lagerung) kann der Axialschub des Antriebs aufgefangen werden. Ferner wird durch diese Kombination ein reduziertes Antriebsdrehmoment erreicht. Das Kugellager besteht bevorzugt aus Edelstahl und ist an dem wellenzapfenseitigen Ende der Antriebswelle angeordnet. Es ermöglicht außerdem, dass die Antriebswelle sowohl links- als auch rechtsherum gedreht werden kann.

Erfindungsgemäß ist das erste Zahnrad über eine spülbare Passfeder mit der Antriebswelle verbunden, so dass auch die Passfeder von Farbresten oder dgl. reinigbar ist. Zudem ermöglicht dieser Aufbau einen einfacheren Dichtungswechsel ohne Pumpendemontage. Hierfür wird nach dem Lösen der Abdeckung des Kugellagers die Welle mit der Führungswellendichtung und dem Kugellager, die vorzugsweise eine Einheit bilden, gemeinsam aus der entsprechenden Bohrung des ersten Zahnrads herausgezogen und ein Dichtungswechsel vorgenommen.

Vorzugsweise besteht das Gehäuse zumindest aus einer Lagerplatte, einer Mittelplatte und einer wellenzapfenseitigen Platte, wobei die Lagerplatte neben der Mittelplatte und die Mittelplatte neben der wellenzapfenseitigen Platte angeordnet ist und wobei die mindestens zwei Zahnräder des Triebwerks in einer entsprechenden Ausnehmung der Mittelplatte angeordnet sind. Eine Verstellung des Fördervolumens der Zahnradpumpe ist hierdurch sehr einfach möglich, da lediglich die Mittelplatte mit den Zahnrädern und den entsprechenden Wellen und Achsen ausgetauscht werden muss. Für eine Verbesserung der Abdichtung des Gehäuseinneren ist zwischen der Lagerplatte und der Mittelplatte sowie zwischen der Mittelplatte und der wellenzapfenseitigen Platte jeweils eine O-Ring-Dichtung zur Abdichtung des jeweiligen Plattenspalts vorgesehen. Die Zahnradmaschine weist außerdem wenigstens einen Passstift, vorzugsweise mindestens zwei Passstifte auf, durch welchen die Mittelplatte, die Lagerplatte und die wellenzapfenseitige Platte in ihrer Lage relativ zueinander ausgerichtet werden. Hierfür weist mindestens eine der genannten Platten zu der Lage der Passstifte passend angeordnete Passbuchsen auf.

Bevorzugt bestehen zumindest das Gehäuse und die zwei miteinander kämmenden Zahnräder und die Achsen bzw. Wellen des Triebwerks aus einem Edelstahl mit einer verschleißhemmenden Beschichtung, beispielsweise einer Keramikbeschichtung, einer DLC-Beschichtung (DLC = Diamond Like Carbon) und/oder einer ADLC-Beschichtung (ADLC = Amorphous Diamond Like Carbon). Die DLC- oder die ADLC-Beschichtung wird aus (amorphem) Kohlenstoff gebildet und ist somit sehr hart.

Weiterbildungen, Vorteile und Anwendungsmöglichkeiten der Erfindung ergeben sich auch aus der nachfolgenden Beschreibung eines Ausführungsbeispiels und der Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen schematisch:

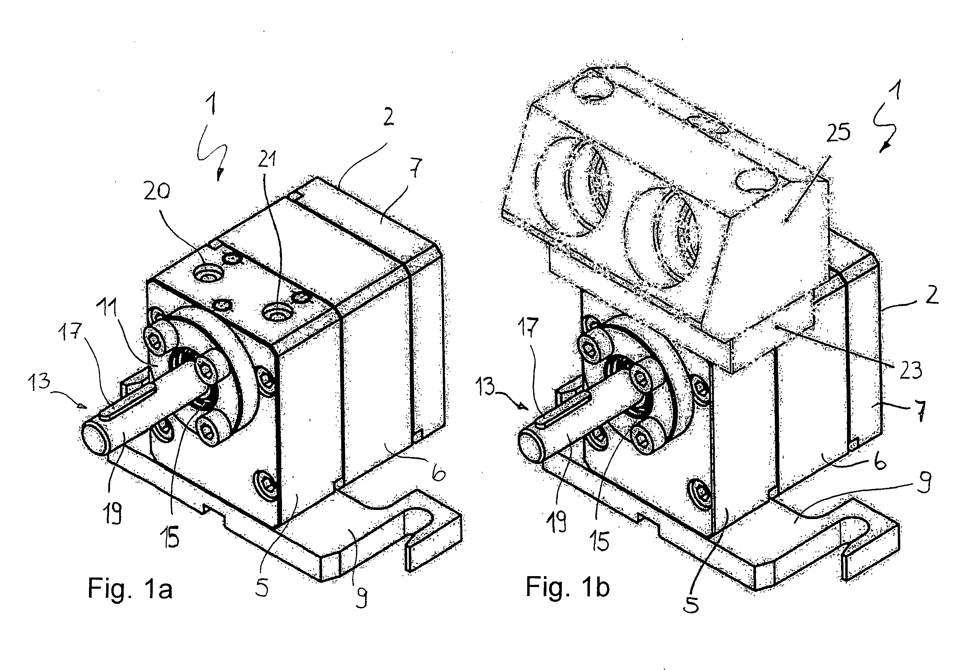

- Fig. 1 a: in perspektivischer Ansicht eine erfindungsgemäße Zahnradmaschine mit einem Halter,
- Fig. 1 b: die Zahnradmaschine aus Fig. 1 a in perspektivischer Ansicht mit Halter, Anschlussblock und Adapterplatte,
- Fig. 2: die Zahnradmaschine aus Fig. 1 a in einer Ansicht von vorn,
- Fig. 3: die Zahnradmaschine aus Fig. 1 a in einer Ansicht von hinten,

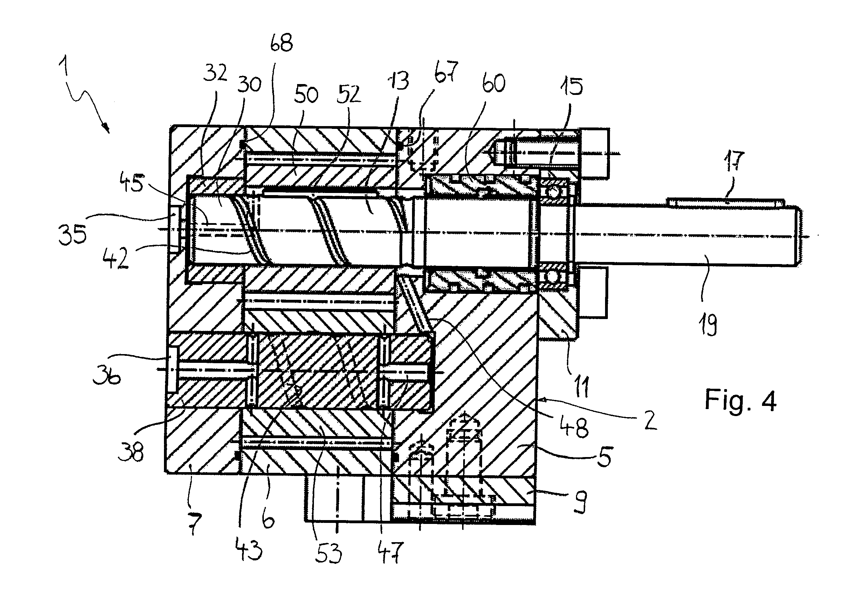

- Fig. 4: die Zahnradmaschine aus Fig. 1 a in einem Längsschnitt und

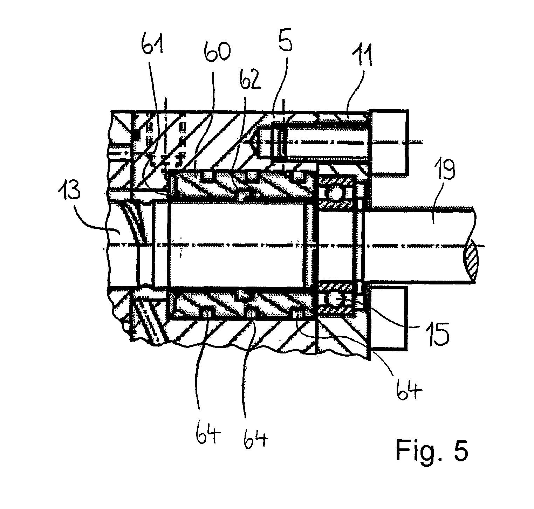

- Fig. 5: einen Ausschnitt aus dem Längsschnitt nach Fig. 4.

In Fig. 1 a ist das Gehäuse 2 einer erfindungsgemäßen Zahnradpumpe 1 dargestellt, welches sich aus einer wellenzapfenseitigen Platte 5, einer Mittelplatte 6 und einer Lagerplatte 7 zusammensetzt. Die wellenzapfenseitige Platte 5 des Gehäuses 2 ist mit einem Halter 9, der im Wesentlichen plattenförmig gestaltet ist, verbunden. Der Halter 9 ermöglicht durch ihre Gestaltung die Montage der kleineren Zahnradpumpe an Anlagen, die mit herkömmlichen Zahnradpumpen bestückt waren.

An der vorderen Stirnfläche der wellenzapfenseitigen Platte 5 ist eine Lagerscheibe 11 angeordnet, in der die Antriebswelle 13 in einem Kugellager 15 gelagert ist. Über eine Passfeder 17, welche an dem als Wellenzapfen ausgebildeten, aus dem Gehäuse 2 heraus ragenden Ende 19 der Antriebswelle 13 angeordnet ist, wird der nicht dargestellte Antriebsmotor mit der Antriebswelle 13 der Zahnradpumpe 1 verbunden.

In der oberen Stirnfläche der wellenzapfenseitigen Platte 5 sind Öffnungen 20, 21 für die Zuführung und Abführung des Lackes bzw. eines Spülmittels vorgesehen. Mittels der in Fig. 1 b strichpunktiert dargestellten Adapterplatte 23 kann eine Anschlussplatte 25, welche für herkömmliche, größer gebaute Zahnradpumpen verwendet wurde, mit den Öffnungen 20, 21 verbunden werden.

Das Triebwerk der Zahnradpumpe in dem dargestellten Ausführungsbeispiel bilden ein erstes Zahnrad 50 und ein zweites Zahnrad 53, welche in dem aus der Lagerplatte 7, der Mittelplatte 6 und der wellenzapfenseitigen Platte 5 gebildeten Gehäuse 2 angeordnet sind. Das erste Zahnrad 50 ist mit der Antriebswelle 13 verdrehsicher mittels einer spülbaren Passfeder 52 verbunden. Auf einer Achse 38, welche an dem Gehäuse 2 in einer entsprechenden Ausnehmung der Lagerplatte 7 befestigt ist, ist das zweite Zahnrad 53 gelagert. Das erste Zahnrad 50 und das zweite Zahnrad 53 kämmen miteinander und dienen zur Förderung des Lackes in einer voreingestellten Menge entsprechend des Drehwinkels der Antriebswelle 13 bzw. der Zahnräder 50, 53.

An dem Ende 30, welches dem wellenzapfenseitigen Ende 19 der Antriebswelle 13 gegenüberliegt, ist in einer entsprechenden Aussparung der Lagerplatte 7 fest angeordnet ein hohlzylindrisches Lagerelement 32 vorgesehen, welches ein Gleitlager für die Antriebswelle 13 bildet. Dieses Lagerelement 32 ist auswechselbar und besteht vorzugsweise mindestens teilweise aus einem lösemittelbeständigen Kunststoff, vorzugsweise aus PTFE, aus einem PTFE-Compound, aus PE, aus PA und/oder aus POM und/oder einem oder mehreren der zuvor genannten Kunststoffe verstärkt durch Glasfasern. In einer besonders bevorzugten Ausführungsform besteht das Lagerelement 32 aus einem glasfaserverstärkten PTFE.

In einem weiteren Ausführungsbeispiel kann das am wellenzapfenseitigen Ende 19 der Antriebswelle 13 vorgesehenen Gleitlager auch aus einer entsprechenden zylindrischen Ausnehmung in der Lagerplatte 7 gebildet werden, der an allen, das Lager bildenden Innenflächen eine lösemittelbeständige Kunststoffbeschichtung, vorzugsweise eine PTFE- oder PTFE-Compound-Beschichtung, besonders bevorzugt verstärkt durch Glasfasern aufweist.

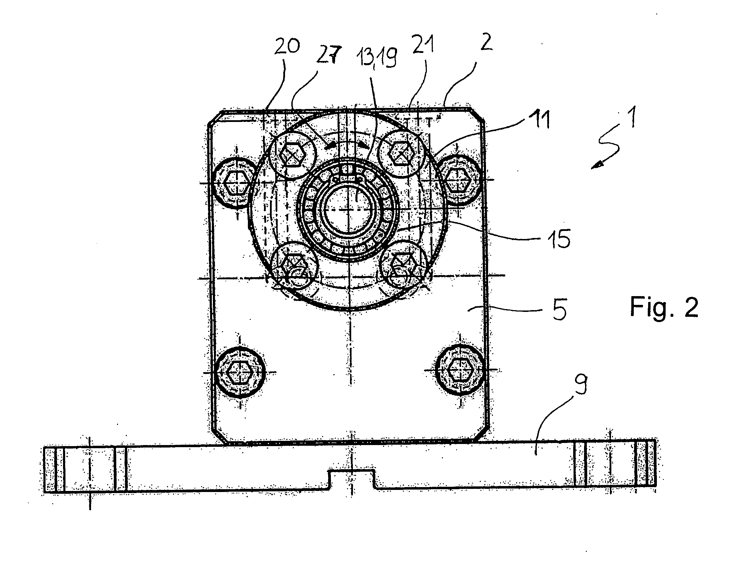

Die Antriebswelle 13 wird durch das Lagerelement 32 und das Kugellager 15 gelagert. Anhand eines Doppelpfeils 27 ist in der in Fig. 2 dargestellten Vorderansicht des Gehäuses 2 mit der Lagerscheibe 11 verdeutlicht, dass die erfindungsgemäße Zahnradpumpe durch diese Kombination von Kugellager 15 und Kunststoff-Lagerelement 32 eine Drehung der Antriebswelle 13 sowohl links- als auch rechtsherum erlaubt.
Das Gehäuseinnere wird an der Antriebswelle 13 nach außen mittels einer hohlzylinderförmigen Führungswellendichtung 60 abgedichtet, welche in Richtung des wellenzapfenseitigen Endes 19 der Antriebswelle 13 innen im Gehäuse 2 vor dem Kugellager 15 angeordnet ist. An der inneren Mantelfläche der Führungswellendichtung 60 weist diese eine erste Dichtlippe 61 und eine zweite Dichtlippe 62 auf, welche in Längsrichtung der Führungswellendichtung 60 nacheinander angeordnet sind. Hierbei ist die erste Dichtlippe 61 direkt an dem triebwerksseitigen Ende der inneren Mantelfläche der Führungswellendichtung 60 angeordnet. Der Lack bzw. das Spülfluid können somit bis zur ersten Dichtlippe 61 in den Spalt zwischen Antriebswelle 13 und Führungswellendichtung 60 eindringen, so dass die erste Dichtlippe 61 durch das Spülfluid gespült wird. Die Führungswellendichtung 60 ist in eine entsprechende Aussparung der wellenzapfenseitigen Platte 5 eingesetzt und gegen diese mittels drei ebenfalls in Längsrichtung der Führungswellendichtung 60 nacheinander angeordneten O-Ringen 64 abgedichtet, die an der äußeren Mantelfläche der Führungswellendichtung 60 in jeweils einer entsprechenden Nut liegen. Die Führungswellendichtung 60 besteht vorzugsweise aus einem Polyethylen, besonders bevorzugt aus einem UHMW-PE (ultrahochmolekulares Polyethylen), welches besonders hoch verdichtet ist.

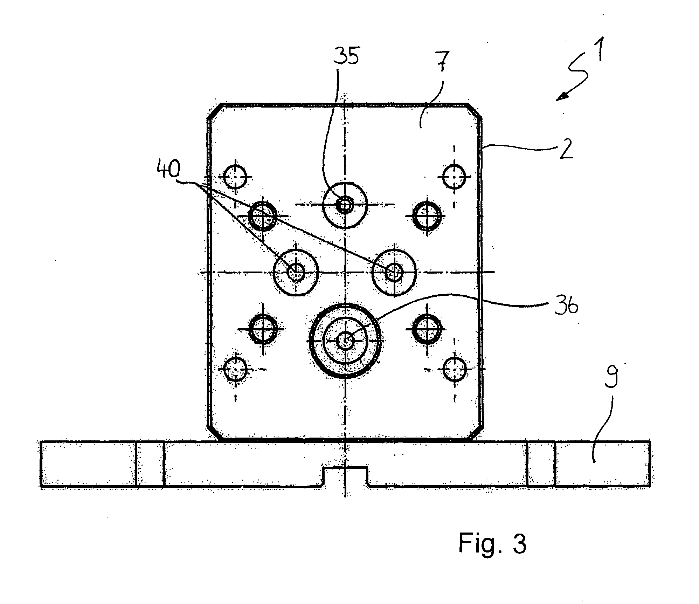

An der in Fig. 3 dargestellten Stirnseite der Lagerplatte 7 sind eine erste Öffnung 35 und eine zweite Öffnung 36 als Eingänge für ein Spülfluid vorgesehen. Die erste Öffnung 35 ist dort angeordnet, wo in der Lagerplatte 7 die Antriebswelle 13 endet. Die zweite Öffnung 36 ist in dem zu dem Ende 30 der Antriebswelle 13 parallelen Ende der Achse 38 angeordnet. Die Stirnfläche der Lagerplatte 7 weist ferner zwischen der ersten Öffnung 35 und der zweiten Öffnung 36 nebeneinander angeordnete Bypass-Anschlüsse 40 auf. Als Spülfluid dienen bevorzugt wasserlösliche Spülmittel, beispielsweise VE-Wasser (vollentsalztes Wasser). Ausgänge für das Spülfluid bilden die an der oberen Stirnfläche der wellenzapfenseitigen Platte 5 angeordneten Anschlüsse 20, 21.
In einem weiteren Ausführungsbeispiel kann die erste Öffnung 35 in der Lagerplatte 7 als Eingang für das Spülfluid und die zweite Öffnung 36 in der Lagerplatte 7 als Ausgang für das Spülfluid oder umgekehrt für einen schnelleren Spülvorgang verwendet werden.

Der Spülkanal wird außerdem bereichsweise gebildet durch eine schraubenlinienförmig um die Antriebswelle 13 umlaufende Nut 42 und eine schraubenlinienförmig um die feststehende Achse 38 umlaufende Nut 43. Der Spülkanal verläuft ferner durch einen zunächst entlang der Längsachse der Antriebswelle 13 verlaufenden und anschließend senkrecht zu der Längsachse verlaufenden Kanal 45. Die Achse 38 weist einen zum Spülkanal gehörenden ersten Kanal 46, der an dem Ende der Achse angeordnet ist, an dem die Öffnung 36 des vorgesehen ist, und einen zweiten Kanal 47 am gegenüber liegenden Ende der Achse 38 auf. Die Känale 46, 47 verlaufen jeweils ausgehend vom jeweiligen Ende der Achse 38 zunächst entlang der Mittellinie der Achse 38 und anschließend quer zu dieser. Ein weiterer Bereich des Spülkanals wird durch einen Kanal 48 in der wellenzapfenseitigen Platte 5 und durch die Räume zwischen den Zahnrädern 50, 53, zwischen dem zweiten Zahnrad 53 und der Achse 38, zwischen dem ersten Zahnrad 50 und der Antriebswelle 13 sowie zwischen den Zahnrädern 50, 53, der Antriebswelle 13, der Achse 38 und dem Gehäuse aus den Platten 5,6,7 gebildet.

Das Gehäuse 2, die wellenzapfenseitige Platte 5, die Mittelplatte 6, die Lagerplatte 7, die Antriebswelle 13 und die Achse 38 bestehen aus Edelstahl und sind DLC- oder ADLC-beschichtet.

Zur Zentrierung weist die Lagerplatte 7 mindestens zwei nicht dargestellte Passstifte und die wellenzapfenseitige Platte 5 und die Mittelplatte 6 jeweils eine entsprechend Anzahl von Passbuchsen auf, durch die die Platten 5, 6, 7 mittels der Passstifte in ihrer Lage relativ zueinander ausgerichtet werden.

Das Innere des Gehäuses 2 ist zwischen wellenzapfenseitiger Platte 5 und Mittelplatte durch einen O-Ring 67 und zwischen Mittelplatte 6 und Lagerplatte 7 durch einen O-Ring 68 abgedichtet.

Bei einem Einsatz der Zahnradmaschine in einem Roboter kann die Zahnradmaschine beispielsweise unmittelbar an dem Zerstäuberkopf im Roboterarm angeordnet werden. Gegebenenfalls wird die Zahnradmaschine in diesem Fall durch das Öl angetrieben, das auch zur Betätigung des Roboterarms dient. In einem weiteren Ausführungsbeispiel kann die Zahnradmaschine in oder an einem Spritzpistolengehäuse angeordnet werden.

### Bezugszeichenliste

- 1: Zahnradpumpe
- 2: Gehäuse
- 5: wellenzapfenseitige Platte
- 6: Mittelplatte

- 7: Lagerplatte
- 9: Halter
- 11: Lagerscheibe
- 13: Antriebswelle
- 15: Kugellager
- 17: Passfeder
- 19: wellenzapfenseitiges Ende der Antriebswelle 13
- 20: Öffnung
- 21: Öffnung
- 23: Adapterplatte
- 25: Anschlussplatte
- 27: Doppelpfeil
- 30: dem wellenzapfenseitigen Ende 19 gegenüberliegendes Ende der Antriebswelle 13
- 32: Lagerelement
- 35: erste Öffnung für das Spülfluid
- 36: zweite Öffnung für das Spülfluid
- 38: Achse
- 40: Bypassanschluss
- 42: Nut in Antriebswelle 13
- 43: Nut in Achse 38

- 45: Kanal in Antriebswelle 13
- 46: erster Kanal in der Achse 38
- 47: zweiter Kanal in der Achse 38
- 48: Kanal in wellenzapfenseitiger Platte 5
- 50: erstes Zahnrad
- 52: spülbare Passfeder
- 53: zweites Zahnrad
- 60: Führungswellendichtung
- 61: erste Dichtlippe
- 62: zweite Dichtlippe
- 64: O-Ring

- 67: O-Ring
- 68: O-Ring

## Patentansprüche

1. Zahnradmaschine (1), insbesondere Zahnradpumpe, mit einem Gehäuse (2) und einem in dem Gehäuse (2) angeordneten Triebwerk aus wenigstens zwei miteinander kämmenden Zahnrädern (50, 53) zur Förderung und/oder Dosierung eines Fluides, insbesondere eines Lackes, eines Wachses, eines Lösemittels, eines Härters, eines Abdichtmittels oder dergl., wobei ein erstes Zahnrad (50) des Triebwerks verdrehsicher mit einer Antriebswelle (13) verbunden ist, die einen aus dem Gehäuse (2) ragenden Wellenzapfen aufweist, wobei das Gehäuse (2) ein Lager (15), in dem die Antriebswelle (13) an dem wellenzapfenseitigen Ende (19) gelagert ist, und ein Gleitlager aufweist, in dessen Lagerbuchse (32) das dem Wellenzapfen gegenüber liegende Ende der Antriebswelle (13) angeordnet ist, **dadurch gekennzeichnet, dass** das Gehäuse (2) an der Antriebswelle (13) in Richtung des wellenzapfenseitigen Endes (19) der Antriebswelle (19) mittels einer Führungswellendichtung (60) abgedichtet ist, die innen liegend vor dem als Wälzlager (15) ausgebildeten Lager angeordnet ist und die mindestens eine Dichtlippe (61, 62) aufweist, und dass die Lagerbuchse (32) eine innere Oberfläche aus Kunststoff aufweist.

2. Zahnradmaschine nach Anspruch 1, **dadurch gekennzeichnet, dass** die Führungswellendichtung (60) aus einem Polyethylen (PE) oder einem Polytetrafluorethylen (PTFE), insbesondere einem UHMW-PE, besteht.

3. Zahnradmaschine nach einem der vorhergehenden Ansprüche, **dadurch gekennzeichnet, dass** der Kunststoff der inneren Oberfläche der Lagerbuchse (32) ein lösemittelbeständiger Kunststoff, beispielsweise ein PTFE (Polytetrafluorethylen) und/oder ein PE (Polyethylen) und/oder ein PA (Polyamid) und/oder ein POM (Polyacetal) und/oder ein Compound mit einem oder mehrerer dieser Materialien ist.

4. Zahnradmaschine nach einem der vorhergehenden Ansprüche, **dadurch gekennzeichnet, dass** die Dicke der die innere Oberfläche der Lagerbuchse (32) bildende Kunststoffschicht mindestens 0,5 mm, bevorzugt mindestens 1,5 mm, besonders bevorzugt mindestens 3 mm beträgt.

5. Zahnradmaschine nach einem der vorhergehenden Ansprüche, **dadurch gekennzeichnet, dass** an dem Gehäuse (2) zur Reinigung seines Inneren, der darin aufgenommenen, wenigstens zwei miteinander kämmenden Zahnräder (50, 53) und der diese tragenden Wellen oder Achsen (13, 38) wenigstens ein Spülkanal vorgesehen ist, der sich von einer Eingangsöffnung (35, 36) zu einer Ausgangsöffnung (20, 21, 35, 36) erstreckt und durch das Innere des Gehäuses (2) verläuft.

6. Zahnradmaschine nach Anspruch 6, **dadurch gekennzeichnet, dass** der Spülkanal bereichsweise durch wenigstens eine der Wellen oder Achsen (13, 38) verläuft und bereichsweise durch eine schraubenlinienförmig um wenigstens eine der Wellen oder Achsen (13, 38) umlaufende Nut (42, 43) gebildet ist und bereichsweise durch den zwischen den Zahnrädern (50, 53) und dem Gehäuse (2) gebildeten Raum verläuft.

7. Zahnradmaschine nach einem der Ansprüche 5 oder 6, **dadurch gekennzeichnet, dass** der Spülkanal eine zweite Eingangsöffnung (36) in einer in dem Gehäuse (2) befestigten Achse (38) aufweist, auf der das mindestens eine zweiten Zahnrad (53) des Triebwerks gelagert ist.

8. Zahnradmaschine nach einem der vorhergehenden Ansprüche, **dadurch gekennzeichnet, dass** die Antriebswelle (13) an ihrem wellenzapfenseitigen Ende (19) ein Kugellager (15) aufweist.

9. Zahnradmaschine nach einem der vorhergehenden Ansprüche, **dadurch gekennzeichnet, dass** das erste Zahnrad (50) mit der Antriebswelle (13) mittels einer spülbaren Passfeder (52) verbunden ist.

10. Zahnradmaschine nach einem der vorhergehenden Ansprüche, **dadurch gekennzeichnet, dass** das Gehäuse (2) zumindest aus einer Lagerplatte (7), einer Mittelplatte (6) und einer wellenzapfenseitigen Platte (5) zusammengesetzt ist, wobei die Lagerplatte (7) neben der Mittelplatte (6) und die Mittelplatte (6) neben der wellenzapfenseitigen Platte (5) angeordnet ist und wobei die mindestens zwei Zahnräder (50, 53) des Triebwerks in einer entsprechenden Ausnehmung der Mittelplatte (6) angeordnet sind.

11. Zahnradmaschine nach Anspruch 10, **dadurch gekennzeichnet, dass** zwischen der Lagerplatte (7) und der Mittelplatte (6) sowie zwischen der Mittelplatte (6) und der wellenzapfenseitigen Platte (5) jeweils eine O-Ring-Dichtung (67, 68) zur Abdichtung des jeweiligen Plattenspalts nach außen vorgesehen ist.

12. Zahnradmaschine nach einem der Ansprüche 10 oder 11, **dadurch gekennzeichnet, dass** die Mittelplatte (6), die Lagerplatte (7) und die wellenzapfenseitige Platte (5) durch wenigstens einen Passstift, vorzugsweise durch wenigstens zwei Passstifte in ihrer Lage relativ zueinander ausgerichtet sind.

13. Zahnradmaschine nach einem der vorhergehenden Ansprüche, **dadurch gekennzeichnet, dass** zumindest das Gehäuse (2), die zwei miteinander kämmenden Zahnräder (50, 53) sowie die Wellen und Achsen (13, 38) des Triebwerks aus Edelstahl mit einer verschleißhemmenden Beschichtung, vorzugsweise mit einer DLC- oder ADLC-Beschichtung, bestehen.
